# EUROPÄISCHE PATENTSCHRIFT

(11) **EP 3 647 794 B1**
(45) Veröffentlichungstag und Bekanntmachung des Hinweises auf die Patenterteilung: **21.07.2021**
(21) Anmeldenummer: 19204519.3
(22) Anmeldetag: 22.10.2019
(51) Int. Cl.: G01P 1/12, G07C 5/08

(54) **VERFAHREN ZUM STEUERN EINER KOMMUNIKATION ZWISCHEN EINER AUFZEICHNUNGSEINHEIT UND EINEM GESCHWINDIGKEITSGEBER EINES TACHOGRAPHENSYSTEMS EINES KRAFTFAHRZEUGS SOWIE KORRESPONDIERENDES TACHOGRAPHENSYSTEM UND AUFZEICHNUNGSEINHEIT FÜR DAS TACHOGRAPHENSYSTEM**
METHOD FOR CONTROLLING COMMUNICATION BETWEEN A RECORDING UNIT AND A SPEED SENSOR OF A TACHOGRAPH SYSTEM OF A MOTOR VEHICLE AND CORRESPONDING TACHOGRAPH SYSTEM AND RECORDING UNIT FOR SAID TACHOGRAPH SYSTEM
PROCÉDÉ DE COMMANDE D'UNE COMMUNICATION ENTRE UNE UNITÉ D'ENREGISTREMENT ET UN CAPTEUR DE VITESSE D'UN SYSTÈME DE TACHYGRAPHE D'UN VÉHICULE AUTOMOBILE, AINSI QU'UN SYSTÈME DE TACHYGRAPHE CORRESPONDANT ET UNITÉ D'ENREGISTREMENT POUR LE SYSTÈME DE TACHYGRAPHE

(30) Priorität: 31.10.2018 DE 102018218677
(43) Veröffentlichungstag der Anmeldung: 06.05.2020
(73) Patentinhaber: Continental Automotive GmbH, 30165 Hannover (DE)
(72) Erfinder: Smolin, Denis, 65824 Schwalbach a. Ts. (DE); Gregory, Alastair, 65824 Schwalbach a. Ts. (DE); Farcas, Adrian-Emilian, 65824 Schwalbach a. Ts. (DE)
(74) Vertreter: Continental Corporation

(56) Entgegenhaltungen:
- DE-B3-102004 043 052
- ANONYMOUS: "ISO 16844-3:2004 Road vehicles- Tachograph systems- part 3: Motion sensor interface", ISO STANDARD, ISO, CH , 1. November 2004 (2004-11-01), Seiten 1-40, XP009517496, Gefunden im Internet: URL:https://www.iso.org/standard/33656.htm l

## Beschreibung

Die Erfindung betrifft ein Verfahren zum Steuern einer Kommunikation zwischen einer Aufzeichnungseinheit und einem Geschwindigkeitsgeber, die zusammen ein Tachographensystem eines Kraftfahrzeugs darstellen. Zu der Erfindung gehören auch ein gemäß dem Verfahren betreibbares Tachographensystem sowie eine Aufzeichnungseinheit, die in dem Tachographensystem verwendet werden kann.

Ein Tachographensystem der genannten Art ist aus der DE 10 2008 006 840 A1 bekannt. Zudem ist ein Tachographensystem für ein Kraftfahrzeug in dem internationalen Standard ISO 16844-3 beschrieben. Ein solches Tachographensystem wird durch die Erfindung weitergebildet.

Gemäß dem Stand der Technik ist vorgesehen, dass in einem Tachographensystem eine Aufzeichnungseinheit (englisch: Recording Unit RU) Daten aus einem Geschwindigkeitsgeber (englisch: Motion Sensor) ausliest und diese Daten für eine spätere Verwendung und/oder zum Anzeigen auf einem Bildschirm speichert. Die Daten können Auskunft über Aktivitäten eines Fahrers des Kraftfahrzeugs geben.

Damit die Aufzeichnungseinheit die Daten aus dem Geschwindigkeitsgeber erhält, ist vorgesehen, dass die Aufzeichnungseinheit jeweils einen Befehl an den Geschwindigkeitsgeber aussendet und daraufhin der Geschwindigkeitsgeber die durch den Befehl angeforderten Daten an die Aufzeichnungseinheit ausgibt.

Tachographensysteme für Kraftfahrzeuge sind schon seit vielen Jahren im Einsatz. Entsprechend unterschiedliche Varianten und/oder Technologien gibt es für die Aufzeichnungseinheiten und die Geschwindigkeitsgeber. Insbesondere ergeben sich deshalb auch unterschiedliche Verarbeitungsgeschwindigkeiten von Befehlen innerhalb der unterschiedlichen Geschwindigkeitsgeber. Um unterschiedliche Technologien kompatibel zu halten, ist eine Wartezeit vorgeschrieben, damit eine Aufzeichnungseinheit nach dem Aussenden eines Befehls zunächst die vorbestimmte Wartezeit abwartet, bevor sie den nächsten Befehl an den Geschwindigkeitsgeber aussendet. Hierdurch wird verhindert, dass ein Mikrocontroller des Geschwindigkeitsgebers überlastet wird, falls dieser langsam arbeitet. Um die vielen unterschiedlichen Technologien zu berücksichtigen, ist es üblich, dass eine Aufzeichnungseinheit als Wartezeit einen derart großen Zeitwert einstellt, dass auch ein Geschwindigkeitsgeber der langsamsten Technologie berücksichtigt ist und nicht überlastet wird. Der bereits genannte internationale Standard sieht z.B. vor, dass eine Wartezeit von bis zu 25 Sekunden (genauer 25.200 Millisekunden) für einige Befehle abgewartet wird.

Hierdurch bleibt aber das Potential eines Geschwindigkeitsgebers, der auch eine schnellere Abfolge von Befehlen bearbeiten oder beantworten könnte, ungenutzt. Möchte man z.B. ein Tachographensystem in einem Kraftfahrzeug beispielsweise nach der Fertigstellung eines Kraftfahrzeugs einem Test oder einer Diagnose unterziehen, die mehrere solcher Befehle umfasst, so muss zu jedem Befehl eine Wartezeit von 25 Sekunden eingeplant werden, was die Diagnose unerwünscht in die Länge zieht.

Der Erfindung liegt die Aufgabe zugrunde, eine effiziente Kommunikation zwischen einer Aufzeichnungseinheit und einem Geschwindigkeitsgeber eines Tachographensystems eines Kraftfahrzeugs zu ermöglichen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Steuern der Kommunikation zwischen einer Aufzeichnungseinheit und einem Geschwindigkeitsgeber eines Tachographensystems eines Kraftfahrzeugs bereitgestellt. Das Verfahren sieht vor, dass die Aufzeichnungseinheit wiederholt jeweils einen Befehl an den Geschwindigkeitsgeber aussendet und aus dem Geschwindigkeitsgeber Daten zu dem Befehl empfängt, die hier als Antwortdaten bezeichnet werden. Mit anderen Worten werden also nacheinander mehrere Kommunikationszyklen durchgeführt, von denen jeder vorsieht, dass die Aufzeichnungseinheit einen Befehl an den Geschwindigkeitsgeber aussendet und aus dem Geschwindigkeitsgeber Antwortdaten zu dem Befehl empfängt. Jeder Befehl kann also bestimmte Antwortdaten bei dem Geschwindigkeitsgeber anfordern. In der beschriebenen Weise muss aber die Aufzeichnungseinheit zwischen dem Aussenden aufeinanderfolgender Befehle jeweils eine vorbestimmte Wartezeit abwarten. Zwischen dem Aussenden eines Befehls und dem Aussenden des nächsten Befehls wird also jeweils eine jeweilige Wartezeit abgewartet. Hierdurch soll in der beschriebenen Weise verhindert werden, dass der Geschwindigkeitsgeber aufgrund einer zu dichten Folge oder Rate von Befehlen überlastet wird.

Um nun dabei dennoch die Kommunikation zeiteffizient zu gestalten, sieht die Erfindung vor, dass die Aufzeichnungseinheit vor dem Aussenden des ersten der beschriebenen Befehle einen Anfragebefehl an den Geschwindigkeitsgeber aussendet. Dieser Anfragebefehl fragt an, welche Pausendauer der Geschwindigkeitsgeber zwischen zwei Befehlen mindestens benötigt. Mit anderen Worten fragt die Aufzeichnungseinheit mittels des Anfragebefehls bei dem Geschwindigkeitsgeber an, wie lange die Wartezeit bei diesem spezifischen Geschwindigkeitsgeber sein muss. Die Aufzeichnungseinheit versucht also mittels des Anfragebefehls herauszufinden, welche Bearbeitungsgeschwindigkeit oder Befehlstaktung bei dem konkreten Geschwindigkeitsgeber möglich ist. Falls der Geschwindigkeitsgeber auf diesen Anfragebefehl hin Zeitdauerdaten betreffend die Pausendauer bereitstellt, stellt die Aufzeichnungseinheit entsprechend ihre jeweilige Wartezeit, die sie zwischen zwei aufeinanderfolgenden Befehlen abwartet, in Abhängigkeit von diesen Zeitdauerdaten ein. Mit anderen Worten adaptiert die Aufzeichnungseinheit ihr Sendeverhalten für aufeinanderfolgende Befehle an den Geschwindigkeitsgeber. Hierzu stellt sie die jeweilige Wartezeit zwischen zwei Befehlen derart ein, dass die benötigte Pausendauer, wie sie durch die Zeitdauerdaten beschrieben ist, berücksichtigt ist.

Durch die Erfindung ergibt sich der Vorteil, dass die Aufzeichnungseinheit die Wartezeit zwischen zwei aufeinanderfolgenden Befehlen nicht pauschal auf einen Standardwert einstellt, sondern ihre Wartezeit an den Geschwindigkeitsgeber anpasst, der die Befehle empfangen soll. Hierzu fragt die Aufzeichnungseinheit von dem Geschwindigkeitsgeber entsprechende Zeitdauerdaten ab.

Die Erfindung umfasst auch Ausführungsformen, durch die sich zusätzliche Vorteile ergeben.

In einer Ausführungsform stellt die Aufzeichnungseinheit für den Fall, dass der Geschwindigkeitsgeber auf den Anfragebefehl hin signalisiert, dass die Zeitdauerdaten fehlen, die jeweilige Wartezeit auf einen vorbestimmten Standardwert ein. Mit anderen Worten gibt es eine Rückfalllösung für den Fall, dass der Geschwindigkeitsgeber nicht daran angepasst ist, Zeitdauer bereitzustellen. Hierdurch ist es möglich, auch im Rahmen der adaptiven Kommunikation auf die Standardlösung aus dem Stand der Technik zurückzufallen, wenn kein geeigneter Geschwindigkeitsgeber vorhanden ist, der Zeitdauerdaten bereitstellen kann. Das Fehlen der Zeitdauerdaten kann auch dadurch signalisiert werden, dass auf den Anfragebefehl hin geschwiegen oder nicht geantwortet wird.

In einer Ausführungsform fordert die Aufzeichnungseinheit mittels des Anfragebefehls von dem Geschwindigkeitsgeber eine Übertragung aus einer Datei an. Es geht hierbei um eine Datei, in welcher die Zeitdauerdaten gespeichert sein sollen. Als Anfragebefehl kann ein allgemeiner oder generischer Befehl zum Übertragen einer Datei genutzt werden. Hierdurch ergibt sich der Vorteil, dass verhindert ist, dass der Geschwindigkeitsgeber den Anfragebefehl eventuell nicht kennt und somit mit einer Fehlermeldung reagiert. Im Falle eines unbekannten Befehls oder einer unbekannten Anfragebefehls auf eine unbekannte Datei es ist auch im Stand der Technik bereits definiert, dass der Geschwindigkeitsgeber einfach nicht antwortet. Somit ist es kein Problem, wenn die alten Geschwindigkeitsgeber diesen neuen Anfragebefehl oder einen Befehl zum Ausgeben einer Datei für die Zeitdauerdaten nicht kennen - diese werden die unbekannte Anfrage einfach ignorieren.

In einer Ausführungsform geben die Zeitdauerdaten, die der Geschwindigkeitsgeber bereitstellt, befehlsabhängige Zeitdauern an. Das heißt, es kann für jeden Befehl individuell angegeben werden, welche Pausendauer nach dem Empfang des Befehls mindestens notwendig ist. Hierdurch kann der Bearbeitungsumfang oder die Komplexität des jeweiligen Befehls berücksichtigt werden. Die Aufzeichnungseinheit stellt entsprechend ihre jeweilige Wartezeit zusätzlich in Abhängigkeit von dem zuletzt gesendeten Befehl ein. Mit anderen Worten prüft also die Aufzeichnungseinheit, welcher Befehl zuletzt gesendet wurde, und stellt dann die diesem Befehl folgende Wartezeit entsprechend den Zeitdauerdaten ein.

In einer Ausführungsform stellt die Aufzeichnungseinheit die jeweilige Wartezeit auf die in den Zeitdauerdaten angegebene Pausendauer ein. Mit anderen Worten wird also die minimal mögliche Wartezeit abgewartet. In einer alternativen Ausführungsform stellt die Aufzeichnungseinheit die Wartezeit auf einen Zeitdauerwert ein, welcher der Pausendauer zuzüglich eines vorbestimmten Pufferwerts entspricht. Hierdurch ergibt sich der Vorteil, dass eine Asynchronität von Uhren oder Zeitgebern der Aufzeichnungseinheit einerseits und des Geschwindigkeitsgebers andererseits kompensiert werden kann. Der Pufferwert kann in einem Bereich von einer Millisekunde bis 100 Millisekunden liegen.

In einer Ausführungsform werden die Befehle oder zumindest einige der Befehle während einer Parkphase des Kraftfahrzeugs gesendet. In der Parkphase kann die Zündung des Kraftfahrzeugs abgestellt oder ausgestellt sein. Mit anderen Worten wird in der Parkphase das Tachographensystem ausschließlich durch eine Batterie des Kraftfahrzeugs mit elektrischer Energie versorgt. Indem in dieser Parkphase die Kommunikation mit angepasster Wartezeit zwischen den Befehlen durchgeführt wird, kann die Abfolge der Befehle in kürzerer Zeit erfolgen als für den Fall, dass die Wartezeit auf einen Standardwert eingestellt wird, welcher auch den langsamsten Geschwindigkeitsgeber berücksichtigt. Somit kann nach dem letzten Befehl das Tachographensystem wieder in einen Sleep-Modus (Stand-by-Modus, Schlafmodus) geschaltet werden, in welchem ein elektrischer Leistungsverbrauch geringer ist als während der Kommunikation. Dies verringert den Energieverbrauch der Fahrzeugbatterie.

Zusätzlich oder alternativ zur Parkphase können einige oder alle der Befehle während einer Abschlussprüfung bei einer Herstellung des Kraftfahrzeugs gesendet werden. Auch hier verkürzt sich durch die beschriebene Kommunikation die Wartezeit bis zum Abschluss der Diagnose oder Abschlussprüfung. Dies steigert die Effizienz der Herstellung des Kraftfahrzeugs.

Um das erfindungsgemäße Verfahren durchführen zu können, ist durch die Erfindung auch eine Aufzeichnungseinheit für ein Tachographensystem eines Kraftfahrzeugs bereitgestellt. Die Aufzeichnungseinheit weist eine Recheneinrichtung auf, die dazu eingerichtet ist, eine Ausführungsform des erfindungsgemäßen Verfahrens durchzuführen. Die Recheneinrichtung kann hierzu zumindest einen Mikrocontroller aufweisen. Die Verfahrensschritte des Verfahrens können als ein Programmcode für die Recheneinrichtung realisiert sein. Dieser Programmcode führt dann beim Ausführen durch die Recheneinrichtung das erfindungsgemäße Verfahren durch. Der Programmcode kann in einem Datenspeicher der Recheneinrichtung gespeichert sein.

Zu der Erfindung gehört auch die Kombination aus einer Aufzeichnungseinheit gemäß der Erfindung und einem mit der Aufzeichnungseinheit verbundenen Geschwindigkeitsgeber. Mit anderen Worten umfasst die Erfindung auch ein Tachographensystem mit einer Ausführungsform der erfindungsgemäßen Aufzeichnungseinheit.

In einer Ausführungsform sieht das Tachographensystem vor, dass in dem Geschwindigkeitsgeber die Zeitdauerdaten in einer Datei oder in anderer Form gespeichert sind, wobei die Zeitdauerdaten angeben, welche Pausendauer der Geschwindigkeitsgeber zwischen dem Empfang zweier aufeinanderfolgender Befehle der Aufzeichnungseinheit mindestens benötigt. Wird diese Pausendauer unterschritten, kann der Geschwindigkeitsgeber den zweiten Befehl nicht bearbeiten, weil die Bearbeitung des ersten Befehls noch nicht abgeschlossen ist und/oder zunächst eine andere Bearbeitungsroutine abgeschlossen werden muss. Der Geschwindigkeitsgeber ist des Weiteren dazu eingerichtet, die Zeitdauerdaten auf einen Anfragebefehl der Aufzeichnungseinheiten hin an diese auszusenden.

Schließlich umfasst die Erfindung auch ein Kraftfahrzeug mit einer Ausführungsform des erfindungsgemäßen Tachographensystems. Das Kraftfahrzeug ist insbesondere als Kraftwagen ausgestaltet, bevorzugt als Lastkraftwagen, oder als Personenbeförderungsfahrzeug, beispielsweise als Personenbus.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: ein Diagramm zur Veranschaulichung einer Ausführungsform des erfindungsgemäßen Verfahrens, wie es in dem Kraftfahrzeug von Fig. 1 durchgeführt werden kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

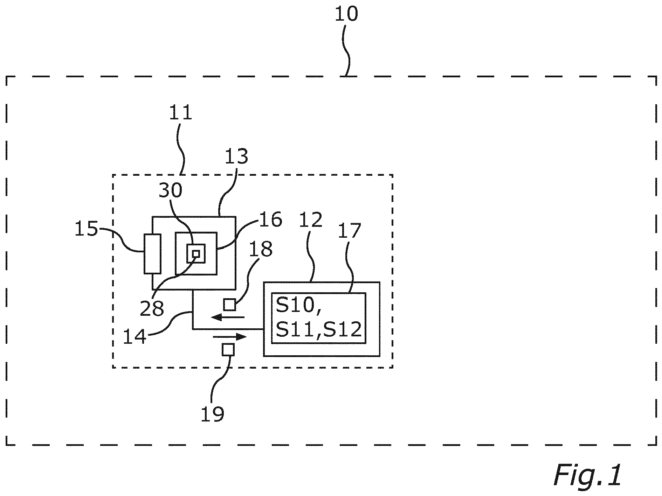

Fig. 1 zeigt ein Kraftfahrzeug 10, bei dem es sich beispielsweise um einen Lastkraftwagen oder Personenkraftwagen handeln kann. In dem Kraftfahrzeug 10 kann ein Tachographensystem 11 bereitgestellt sein. Mittels des Tachographensystems 11 können Daten betreffend eine Fahraktivität eines Fahrers in dem Kraftfahrzeug 10 ermittelt und gespeichert werden. Hierzu kann das Tachographensystem 11 eine Aufzeichnungseinheit 12 und einen Geschwindigkeitsgeber 13 aufweisen. Die Aufzeichnungseinheit 12 und der Geschwindigkeitsgeber 13 können über eine Kommunikationsverbindung 14 miteinander verbunden sein. Die Kommunikationsverbindung 14 kann beispielsweise auf der Grundlage eines Kabels oder eines Datenbusses realisiert sein. Es kann sich insbesondere um eine Kommunikationsverbindung handeln, wie sie in dem internationalen Standard ISO 16844-3, z. B. in dessen Fassung am Prioritätstag vorliegender Anmeldung, vorgegeben ist.

Zum Erfassen einer Fahrzeugbewegung kann der Geschwindigkeitsgeber 13 ein Bewegungssensorelement 15 aufweisen. Für eine Erfassung von Daten betreffend die Bewegung kann eine Recheneinrichtung 16 in dem Geschwindigkeitsgeber 13 bereitgestellt sein.

Die Aufzeichnungseinheit 12 kann eine Prozessoreinrichtung 17 aufweisen, die über die Kommunikationsverbindung 14 an den Geschwindigkeitsgeber 13 Befehle 18 aussenden kann, von denen jeder jeweils Daten 19 aus dem Geschwindigkeitsgeber 13 anfordert. Bei den Daten kann es sich beispielsweise um Bewegungsdaten handeln, die auf der Grundlage des Bewegungssensorelements 15 erzeugt werden können. Hierbei muss die Aufzeichnungseinheit 12 allerdings berücksichtigen, dass eine zeitliche Abfolge zwischen den einzelnen Befehlen 18 nicht zu kurz oder zu dicht sein darf, da ansonsten die Recheneinrichtung 16 des Geschwindigkeitsgebers 13 überlastet werden kann. Damit also der Geschwindigkeitsgeber 13 auf jeden Befehl 18 mit den Daten 19 antworten kann, muss zwischen den Befehlen 18 jeweils eine Wartezeit abgewartet werden. Die Antwort des Geschwindigkeitsgebers ist durch die Anfrage bedingt und ist nicht bei allen Anfragen vorhanden.

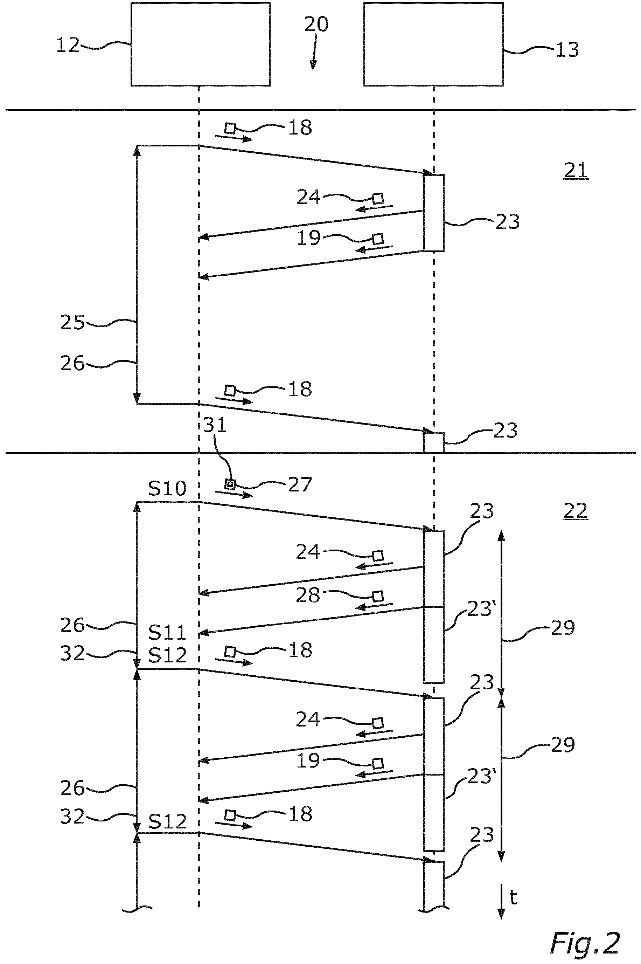

Dies ist in Fig. 2 noch einmal verdeutlicht. Fig. 2 zeigt über der Zeit t, wie eine Kommunikation 20 zwischen der Aufzeichnungseinheit 12 und dem Geschwindigkeitsgeber 13 ausgeführt werden kann. In einer ersten Kommunikationsphase 21 ist ein Kommunikationsablauf dargestellt, wie er sich auch im Stand der Technik ergeben könnte. In einer zweiten Kommunikationsphase 22 ist dargestellt, wie mittels Verfahrensschritten S10, S11, S12 (siehe auch Fig. 1) beispielsweise durch die Prozessoreinrichtung 17 der Aufzeichnungseinheit 12 die Kommunikation 20 an eine Reaktionsgeschwindigkeit und/oder Bearbeitungsgeschwindigkeit der Recheneinrichtung 16 des Geschwindigkeitsgebers 13 angepasst werden kann.

In der Kommunikationsphase 21 kann vorgesehen sein, dass die Aufzeichnungseinheit 12 jeweils einen Befehl 18 an den Geschwindigkeitsgeber 13 aussendet. Im Geschwindigkeitsgeber 13 kann nach Empfang oder durch Empfang des jeweiligen Befehls eine Bearbeitungsphase 23 ausgelöst werden. Es kann vorgesehen sein, dass der Empfang des Befehls 18 durch Bestätigungsdaten 24 (Acknowledge) der Aufzeichnungseinheit 12 bestätigt wird. Nachdem der Befehl 18 bearbeitet wurde, können die durch den Befehl 18 angeforderten Daten 19 an die Aufzeichnungseinheit 12 ausgesendet werden. Eine weiterführende Bearbeitungszeit 23' Geschwindigkeitsgebers kann jedoch länger sein, d.h. die Bearbeitungszeit 23 kann länger sein als dargestellt, aber sie sollte kleiner als oder gleich der Wartezeit 26 sein. Die Aufzeichnungseinheit 12 muss deshalb noch bis zum Ablauf eines Standardwerts 25 einer Wartezeit 26 abwarten um sicher die Bearbeitungszeit 23' des Geschwindigkeitsgebers nicht zu stören, bevor der nächste Befehl 18 ausgesendet wird, welcher dann wieder eine Bearbeitungsphase 23 auslösen kann. Durch Abwarten der Wartezeit 26 soll sichergestellt werden, dass der Betrieb oder die Datenverarbeitung in dem Geschwindigkeitsgeber 13 nicht aufgrund einer zu dichten Folge an Befehlen 18 zum Erliegen kommt oder zumindest gestört oder beeinträchtigt wird.

In der Kommunikationsphase 22 kann die Aufzeichnungseinheit 12 eine Folge von Befehlen 18 aussenden und hierbei die Wartezeit 26 jeweils an die Leistungsfähigkeit oder die Reaktionsgeschwindigkeit des Geschwindigkeitsgebers 13 anpassen. Hierzu kann in einem Schritt S10 vorgesehen sein, dass die Aufzeichnungseinheit 12 an den Geschwindigkeitsgeber 13 einen Anfragebefehl 27 aussendet. Zu dem Anfragebefehl 27 kann der Geschwindigkeitsgeber 13 Zeitdauerdaten 28 bereitstellen, welche angeben, welche Pausendauer 29 zwischen dem Empfang einzelner Befehle 18 notwendig ist. Hierbei kann die Pausendauer 29 durch die Zeitdauerdaten 28 auch befehlsspezifisch definiert oder angegeben sein. Fig. 1 veranschaulicht hierzu, dass die Zeitdauerdaten 28 in einer Datei 30 gespeichert sein können, sodass als Anfragebefehl 27 ein allgemeiner oder generischer Lesebefehl für eine Datei eines vorgegebenen Dateinamens ausgestaltet sein kann.

Sind solche Zeitdauerdaten 28 in dem Geschwindigkeitsgeber 13 nicht vorhanden, so kann die Aufzeichnungseinheit 12 in die beschriebene Kommunikationsphase 21 wechseln.

Sind dagegen Zeitdauerdaten 28 verfügbar, so kann die Aufzeichnungseinheit 12 in einem Schritt S11 die Zeitdauerdaten empfangen und in einem Schritt S12 die jeweilige Wartezeit 26 in Abhängigkeit von den Zeitdauerdaten 28 einstellen. Fig. 2 veranschaulicht, wie ein Zeitwert 32 der Wartezeit 26 kleiner gewählt werden kann als der Standardwert 25 der Kommunikationsphase 21. Beispielsweise kann der Standardwert 25 einen Wert von 25 Sekunden betragen, während der Zeitwert 32 beispielsweise kleiner als fünf Sekunden sein kann.

Mittels des Verfahrens kann die Kommunikationsverbindung gemäß der Schnittstelle nach ISO 16844-3 angepasst oder ausgestaltet werden. Die Wartezeiten oder Time-Outs können dann dynamisch angepasst werden, wobei aber ein Rückfall auf die Werte aus dem Standard selbst möglich ist und somit also der Standard respektiert werden kann.

Für eine Abschlussprüfung bei der Herstellung des Kraftfahrzeugs 10 und/oder während einer Parkphase, in welcher als Energiequelle lediglich die Batterie des Kraftfahrzeugs 10 bereitsteht, kann aber die Kommunikation 20 mit der Anpassung der Wartezeit in Abhängigkeit von den Zeitdauerdaten 28 vorgesehen sein. Diese Anpassung kann aber auch für den übrigen Betrieb des Kraftfahrzeugs vorgesehen sein.

Vor einer jeweiligen Kommunikation 20, also vor einer Abfolge von Befehlen 18 an den Geschwindigkeitsgeber 13, kann die Aufzeichnungseinheit von dem Geschwindigkeitsgeber 13 dessen Kapazität oder Fähigkeit in Bezug auf Wartezeiten 26 abfragen. Hierdurch kann dann die Wartezeit 26 an die benötigte Pausendauer 29 angepasst werden. Dies ergibt eine Beschleunigung der Kommunikation, da der Standardwert 25 den langsamsten Geschwindigkeitsgeber 13 zugrundelegt, während in der Regel modernere oder schnellere Geschwindigkeitsgeber 13 verfügbar sind.

So kann bei einer Installation des Tachographensystems 11 und/oder während einer Parkphase die Abfolge von Befehlen 18 jeweils mit geringerem Zeitaufwand abgearbeitet werden. Bei den Befehlen 18 kann es sich beispielsweise um ein Pairing zwischen Aufzeichnungseinheit 12 und Geschwindigkeitsgeber 13 handeln.

Falls ein Geschwindigkeitsgeber 13 diese Anpassung der Wartezeit 26 nicht unterstützt oder vorsieht, so kann auf den Standardwert 25 zurückgefallen werden. Beispielsweise kann dies entschieden werden, indem erkannt wird, dass der Geschwindigkeitsgeber 13 auf den Anfragebefehl 27 nicht mit der Ausgabe von Zeitdauerdaten 28 reagiert.

Insgesamt zeigt das Beispiel, wie durch die Erfindung eine digitale Aufzeichnungseinheit, eine Schnittstelle zu einem Geschwindigkeitsgeber und eine dynamische Schnittstellenkonfiguration bereitgestellt werden können.

## Patentansprüche

1. Verfahren zum Steuern einer Kommunikation (20) zwischen einer Aufzeichnungseinheit (12) und einem Geschwindigkeitsgeber (13) eines Tachographensystems (11) eines Kraftfahrzeugs (10), wobei die Aufzeichnungseinheit (12) wiederholt jeweils einen Befehl (18) an den Geschwindigkeitsgeber (13) aussendet und aus dem Geschwindigkeitsgeber (13) Antwortdaten (19) zu dem Befehl (18) empfängt, wobei die Aufzeichnungseinheit (12) zwischen dem Aussenden aufeinanderfolgender Befehle (18) jeweils eine vorbestimmte Wartezeit (26) abwartet,
**dadurch gekennzeichnet, dass** die Aufzeichnungseinheit (12) vor dem Aussenden des ersten der Befehle (18) einen Anfragebefehl (27) an den Geschwindigkeitsgeber (13) aussendet, wobei der Anfragebefehl (27) anfragt, welche Pausendauer (29) der Geschwindigkeitsgeber (13) zwischen zwei Befehlen (18) mindestens benötigt, und falls der Geschwindigkeitsgeber (13) auf den Anfragebefehl (27) hin Zeitdauerdaten (28) betreffend die Pausendauer (29) bereitstellt, die Aufzeichnungseinheit (12) die jeweilige Wartezeit (26) in Abhängigkeit von den Zeitdauerdaten (28) einstellt.

2. Verfahren nach Anspruch 1, wobei die Aufzeichnungseinheit (12) für den Fall, dass der Geschwindigkeitsgeber (13) auf den Anfragebefehl (27) hin signalisiert, dass die Zeitdauerdaten (28) fehlen, die jeweilige Wartezeit (26) auf einen vorbestimmten Standardwert (25) einstellt.

3. Verfahren nach einem der vorhergehenden Ansprüche, wobei die Aufzeichnungseinheit (12) mittels des Anfragebefehls (27) von dem Geschwindigkeitsgeber (13) eine Übertragung aus einer Datei (30), in welcher die Zeitdauerdaten (28) gespeichert sein sollen, anfordert.

4. Verfahren nach einem der vorhergehenden Ansprüche, wobei die Zeitdauerdaten (28) befehlsabhängige Pausendauern (29) angeben und die Aufzeichnungseinheit (12) die jeweilige Wartezeit (26) zusätzlich in Abhängigkeit von dem zuletzt gesendeten Befehl (18) einstellt.

5. Verfahren nach einem der vorhergehenden Ansprüche, wobei die Aufzeichnungseinheit (12) die jeweilige Wartezeit (26) auf die in den Zeitdauerdaten (28) angegebene Pausendauer (29) oder auf einen Zeitwert (32), welcher der Pausendauer (29) zuzüglich eines vorbestimmten Pufferwerts entspricht, einstellt.

6. Verfahren nach einem der vorhergehenden Ansprüche, wobei einige oder alle der Befehle (18) während einer Parkphase des Kraftfahrzeugs (10), in welcher das Tachographensystems (11) ausschließlich durch eine Batterie des Kraftfahrzeugs (10) mit elektrischer Energie versorgt wird, gesendet werden und/oder wobei einige oder alle der Befehle (18) während einer Abschlussprüfung bei einer Herstellung des Kraftfahrzeugs (10) gesendet werden.

7. Aufzeichnungseinheit (12) für eine Tachographensystem (11) eines Kraftfahrzeugs (10), **dadurch gekennzeichnet, dass** die Aufzeichnungseinheit (12) eine Recheneinrichtung (17) aufweist, die dazu eingerichtet ist, ein Verfahren nach einem der vorhergehenden Ansprüche durchzuführen.

8. Tachographensystem (11) mit einer Aufzeichnungseinheit (12) und einem mit der Aufzeichnungseinheit (12) verbundenen Geschwindigkeitsgeber (13), **dadurch gekennzeichnet, dass** die Aufzeichnungseinheit (12) gemäß Anspruch 7 ausgestaltet ist.

9. Tachographensystem (11) nach Anspruch 8, wobei in dem Geschwindigkeitsgeber (13) eine Datei (30) gespeichert ist, in welcher Zeitdauerdaten (28) gespeichert sind, die angeben, welche Pausendauer (29) der Geschwindigkeitsgeber (13) zwischen dem Empfang zweier aufeinander folgender Befehle (18) der Aufzeichnungseinheit (12) mindestens benötigt, und der Geschwindigkeitsgeber (13) dazu eingerichtet ist, die Datei (30) auf einen Anfragebefehl (27) der Aufzeichnungseinheit (12) hin an diese auszusenden.

10. Kraftfahrzeug (10) mit einem Tachographensystem (11) nach einem der Ansprüche 8 oder 9.

## Claims

1. Method for controlling communication (20) between a recording unit (12) and a speed transmitter (13) of a tachograph system (11) of a motor vehicle (10), wherein the recording unit (12) in each case repeatedly transmits a command (18) to the speed transmitter (13) and receives response data (19) to the command (18) from the speed transmitter (13), wherein the recording unit (12) waits in each case for a predetermined waiting time (26) between the transmission of successive commands (18), **characterized in that** the recording unit (12), prior to transmitting the first of the commands (18), transmits a request command (27) to the speed transmitter (13), wherein the request command (27) queries the pause duration (29) that the speed transmitter (13) at least requires between two commands (18), and if the speed transmitter (13) provides duration data (28) relating to the pause duration (29) in response to the request command (27), the recording unit (12) sets the respective waiting time (26) on the basis of the duration data (28).

2. Method according to Claim 1, wherein the recording unit (12) sets the respective waiting time (26) to a predetermined standard value (25) in the event that the speed transmitter (13), in response to the request command (27), signals that the duration data (28) are absent.

3. Method according to either of the preceding claims, wherein the recording unit (12), by way of the request command (27), requests a transfer from a file (30) in which the duration data (28) are intended to be stored from the speed transmitter (13).

4. Method according to one of the preceding claims, wherein the duration data (28) specify command-dependent pause durations (29) and the recording unit (12) sets the respective waiting time (26) additionally on the basis of the last transmitted command (18).

5. Method according to one of the preceding claims, wherein the recording unit (12) sets the respective waiting time (26) to the pause duration (29) specified in the duration data (28) or to a temporal value (32) that corresponds to the pause duration (29) plus a predetermined buffer value.

6. Method according to one of the preceding claims, wherein some or all of the commands (18) are transmitted during a parking phase of the motor vehicle (10) in which the tachograph system (11) is supplied with electrical energy solely by a battery of the motor vehicle (10) and/or wherein some or all of the commands (18) are transmitted during a final inspection when the motor vehicle (10) is manufactured.

7. Recording unit (12) for a tachograph system (11) of a motor vehicle (10), **characterized in that** the recording unit (12) has a computing apparatus (17) that is designed to perform a method according to one of the preceding claims.

8. Tachograph system (11) having a recording unit (12) and a speed transmitter (13) connected to the recording unit (12), **characterized in that** the recording unit (12) is designed according to Claim 7.

9. Tachograph system (11) according to Claim 8, wherein the speed transmitter (13) stores a file (30) in which duration data (28) are stored, these specifying the pause duration (29) that the speed transmitter (13) at least requires between the reception of two successive commands (18) from the recording unit (12), and the speed transmitter (13) is designed to transmit the file (30) to the recording unit (12) in response to a request command (27) therefrom.

10. Motor vehicle (10) having a tachograph system (11) according to either of Claims 8 and 9.

## Revendications

1. Procédé pour commander une communication (20) entre une unité d'enregistrement (12) et un transmetteur de vitesse (13) d'un système de tachygraphe (11) d'un véhicule automobile (10), l'unité d'enregistrement (12) émettant de manière répétée respectivement une instruction (18) au transmetteur de vitesse (13) et recevant de la part du transmetteur de vitesse (13) des données de réponse (19) à l'instruction (18), l'unité d'enregistrement (12) attendant respectivement pendant un temps d'attente (26) prédéterminé entre l'émission des instructions (18) successives,
**caractérisé en ce que** l'unité d'enregistrement (12), avant d'émettre la première des instructions (18), émet une instruction d'interrogation (27) au transmetteur de vitesse (13), l'instruction d'interrogation (27) demandant quelle durée de pause (29) minimale nécessite le transmetteur de vitesse (13) entre deux instructions (18), et dans le cas où le transmetteur de vitesse (13), en réponse à l'instruction d'interrogation (27) fournit des données de durée (28) concernant la durée de pause (29), l'unité d'enregistrement (12) règle le temps d'attente (26) respectif en fonction des données de durée (28) .

2. Procédé selon la revendication 1, l'unité d'enregistrement (12), dans le cas où le transmetteur de vitesse (13) signale, en réponse à l'instruction d'interrogation (27), que les données de durée (28) sont manquantes, réglant le temps d'attente (26) respectif à une valeur standard (25) prédéterminée.

3. Procédé selon l'une des revendications précédentes, l'unité d'enregistrement (12) exigeant de la part du transmetteur de vitesse (13), au moyen de l'instruction d'interrogation (27), une transmission depuis un fichier (30) dans lequel doivent être enregistrées les données de durée (28).

4. Procédé selon l'une des revendications précédentes, les données de durée (28) indiquant des durées de pause (29) dépendantes de l'instruction et l'unité d'enregistrement (12) réglant le temps d'attente (26) respectif en plus en fonction de la dernière instruction (18) envoyée.

5. Procédé selon l'une des revendications précédentes, l'unité d'enregistrement (12) réglant le temps d'attente (26) respectif sur la durée de pause (29) indiquée dans les données de durée (28) ou à une valeur de temps (32) qui correspond à la durée de pause (29) plus une valeur tampon prédéterminée.

6. Procédé selon l'une des revendications précédentes, certaines ou la totalité des instructions (18) étant envoyées pendant une phase de stationnement du véhicule automobile (10), dans laquelle le système de tachygraphe (11) est alimenté en énergie électrique exclusivement par une batterie du véhicule automobile (10) et/ou certaines ou la totalité des instructions (18) étant envoyées pendant un contrôle final lors d'une fabrication du véhicule automobile (10).

7. Unité d'enregistrement (12) pour un système de tachygraphe (11) d'un véhicule automobile (10), **caractérisé en ce que** l'unité d'enregistrement (12) possède un dispositif de calcul (17) qui est conçu pour mettre en œuvre un procédé selon l'une des revendications précédentes.

8. Système de tachygraphe (11) comprenant une unité d'enregistrement (12) et un transmetteur de vitesse (13) relié à l'unité d'enregistrement (12), **caractérisé en ce que** l'unité d'enregistrement (12) est configurée selon la revendication 7.

9. Système de tachygraphe (11) selon la revendication 8, un fichier (30) étant enregistré dans le transmetteur de vitesse (13), dans lequel sont enregistrées des données de durée (28) qui indiquent la durée de pause (29) minimale que nécessite le transmetteur de vitesse (13) entre la réception de deux instructions (18) successives de l'unité d'enregistrement (12), et le transmetteur de vitesse (13) étant conçu pour envoyer le fichier (30) à l'unité d'enregistrement (12) en présence d'une instruction d'interrogation (27) de celle-ci.

10. Véhicule automobile (10) comprenant un système de tachygraphe (11) selon l'une des revendications 8 et 9.
